# EUROPÄISCHE PATENTANMELDUNG

(11) **EP 1 582 795 A2**
(43) Veröffentlichungstag der Anmeldung: **05.10.2005**
(21) Anmeldenummer: 05005822.1
(22) Anmeldetag: 17.03.2005
(51) Int. Cl.: F16K 31/122, F16K 31/04, F16K 1/52

(54) **Sperr- und Dosierventil für ein flüssiges Medium, vorzugsweise Wasser**

(30) Priorität: 01.04.2004 DE 102004016774; 13.05.2004 DE 102004024072
(71) Anmelder: TechnoAlpin GmbH, 39100 Bozen (IT)
(72) Erfinder: Rieder, Walter, 39050 Eggen (IT)
(74) Vertreter: Graf, Helmut

(57) **Zusammenfassung**

Bei einem Verschließ- und Dosierventil für ein flüssiges Medium, insbesondere für Wasser, mit einem in einem Ventilgehäuse (2) ausgebildeten Flüssigkeitskanal (3), mit einem einen Ventilkörper (7) aufweisenden Flüssigkeitsventil (6) zwischen einem Einlass (4) und einem Auslass (5) des Flüssigkeitskanals (3) sowie mit einer Kolben-Zylinder-Anordnung (16,17) zum Bewegen des Ventilkörpers (7) für eine Öffnen und Schließen weist das Flüssigkeitsventil (6) einen von dem jeweiligen Bewegungshub des Ventilkörpers (7) aus der Schließposition in eine Öffnungsposition abhängigen Strömungsquerschnitt auf sowie einen durch einen motorisch betätigbaren Anschlag einstellbaren Hub.

## Beschreibung

Die Erfindung bezieht sich auf ein Sperr- und Dosierventil gemäß Oberbegriff Patentanspruch 1.

U. a. bei Beschneiungsanlagen, insbesondere auch bei im Gelände angeordneten Beschneiungsanlagen ist ein Sperren, aber auch ein z.B. geregeltes Dosieren der Wasserzufuhr an die jeweilige Anlage und/oder an den dortigen Schneeerzeuger und/oder dessen Düsen notwendig.

Aufgabe der Erfindung ist es, ein Dosier- und Sperrventil aufzuzeigen, welches bei einfacher konstruktiver Ausbildung und zuverlässiger Betriebsweise ein Sperren sowie Dosieren des Flusses eines Strömungsmediums, insbesondere von Wasser ermöglicht.

Zur Lösung dieser Aufgabe ist ein Dosier- und Sperrventil entsprechend dem Patentanspruch 1 ausgebildet. Mit dem erfindungsgemäßen Dosier- und Sperrventil ist ein Sperren des Flüssigkeits- bzw. Wasserflusses durch Bewegen des Ventilkörpers in seine sperrende Stellung möglich. Durch Bewegen des Ventilkörpers aus dieser sperrenden Stellung ist ferner eine Dosierung des Flüssigkeits- bzw. Wasserflusses möglich, und zwar dadurch, dass der Ventilkörper je nach gewünschter Strömungsmenge über einen kleineren Hub, beispielsweise für eine kleinere Strömungsmenge, oder über einen größeren Hub, beispielsweise für eine größere Strömungsmenge, aus der Schließposition bewegt wird. Der jeweilige Bewegungshub wird durch einen elektromotorischen Antrieb oder einen von diesem Antrieb gesteuerten Anschlag begrenzt.

Das Dosier- und Sperrventil ist bevorzugt so ausgeführt, dass es bei nicht aktivierten Steuerventilen selbst sperrt, und zwar aufgrund des Druckes des flüssigen Mediums. Durch Aktivieren des Steuerventils im ersten Steuerkanal wird dann das Flüssigkeitsventil bzw. der Ventilkörper geöffnet, und zwar bis in eine Hubstellung, die durch den einstellbaren Anschlag festgelegt ist. Durch Schließen des ersten Steuerkanals und durch Öffnen des zweiten Steuerkanals wird dann das Flüssigkeitsventil wiederum allein durch den Druck des flüssigen Mediums geschlossen, und zwar unabhängig von der Stellung des steuerbaren Anschlags.

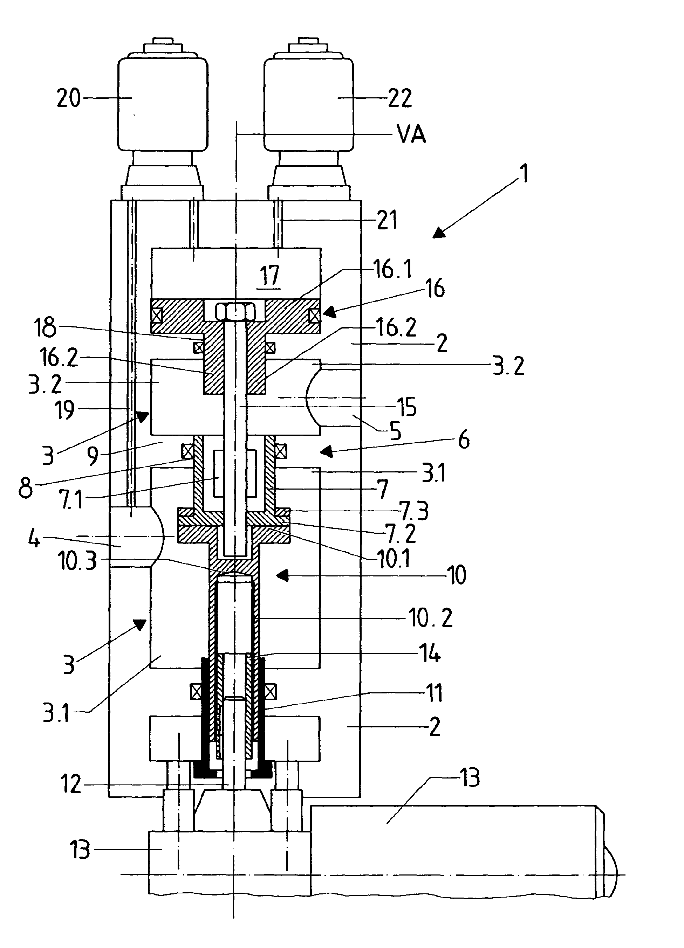

Weiterbildungen der Erfindung sind Gegenstand der Unteransprüche. Die Erfindung wird im Folgenden anhand der Figur, die in einer vereinfachten Schnittdarstellung eine Ausführung des erfindungsgemäßen Dosier- und Sperrventils zeigt, näher erläutert.

Das in der Figur allgemein mit 1 bezeichnete Dosier- und Sperrventil besteht u. a. aus einem Ventilgehäuse 2, in welchem ein Flüssigkeitskanal 3 mit einem Einlass 4 und einem Auslass 5 sowie zwischen dem Einlass 4 und Auslass 5 ein Flüssigkeitsventil 6 vorgesehen sind, welches bei der dargestellten Ausführungsform im Wesentlichen aus einem napfartigen Ventilkörper 7 besteht, der axial in einer Ventilachse VA zwischen einer den Flüssigkeitskanal 3 verschließenden Stellung und Stellungen bewegbar ist, in denen Einlass 4 und Auslass 5 gesteuert über einen mehr oder weniger großen Strömungsquerschnitt miteinander in Verbindung stehen. Der Ventilkörper 7 weist hierfür ein Ventil- oder Steuerfenster 7.1 auf und ist in einer Öffnung 8 in einer Wandung 9 verschiebbar geführt. Dies trennt einen mit dem Einlass 4 in Verbindung stehenden Teilraum 3.1 des Flüssigkeitskanales 3 von einem mit dem Auslass 5 in Verbindung stehenden Teilraum 3.2 trennt.

An seinem in den Teilraum 3.1 hineinragenden, verschlossenen Ende liegt der Ventilkörper 7 einem Ende 10.1 einer Welle 10 gegenüber, die achsgleich mit der Ventilachse VA angeordnet ist und an ihrem das andere Ende einschließenden und als Hohlwelle ausgebildeten Bereich 10.2 in einer im Ventilgehäuse 2 abgedichtet befestigten Führungsbuchse 11 axial verschiebbar geführt ist. Die Welle ist an dem Ende 10.1 mit einem Bund oder Flansch ausgebildet. Einen entsprechenden über die zylindrische Außenfläche wegstehenden Flansch 7.2 weist auch der Ventilkörper 7 auf, sodass dort eine Auflage für eine den Ventilkörper 7 umschließende Ringdichtung 7.3 gebildet ist, die bei geschlossenem Dosier- und Sperrventil gegen eine die Bohrung 8 umgebende Fläche der Wandung 9 abgedichtet anliegt.

In dem als Hohlwelle ausgebildeten Abschnitt 10.2 der Welle 10 ist eine achsgleich mit der Achse VA angeordnete Gewindespindel 12 aufgenommen, die antriebsmäßig mit der Welle eines an Gehäuse 2 vorgesehenen elektromotorischen Antriebs 13 verbunden bzw. Teil dieser Welle ist und mit ihrem Außengewinde mit einem Innengewinde einer im Abschnitt 10.2 vorgesehenen Gewindebuchse 14 zusammenwirkt.

Der Ventilkörper 7 ist in seiner zylinderförmigen Umfangswandung mit dem wenigstens einen Steuerfenster 7.1 versehen, welches in der in der Figur dargestellten Position des Ventilkörpers 7, die der maximalen Öffnungsstellung des Dosier- und Sperrventils 1 entspricht, einen Wasserfluss aus dem Teilraum 3.1 in das innere des Ventilkörpers 7 und von dort in den Teilraum 3.2 ermöglicht, und zwar bei maximalem Strömungsquerschnitt. Bei einer axialen Bewegung des Ventilkörpers 7 verringert sich mit zunehmender Annäherung der Ringdichtung 7.3 an die Wandung 9 der zum Teilraum 3.1 offene Strömungsquerschnitt des Steuerfensters 7.1 und damit der wirksame Strömungsdurchmesser des geöffneten Dosier- und Sperrventils 1, sodass hierdurch eine Dosierung der das Dosier- und Sperrventil am Auslass 5 verlassenden Wassermenge möglich ist.

Über eine achsgleich mit der Achse VA angeordnete Kolben- oder Verbindungsstange 15 ist der Ventilkörper 7 mit einem Kolben 16 verbunden, der eine Servokolbenzylinderanordnung bildet und mit einem größeren Kolbendurchmesser 16.1 in einer im Gehäuse 2 ausgebildeten Zylinderkammer 17 in Richtung der Achse VA verschiebbar vorgesehen ist. Mit einem kleineren Kolbendurchmesser 16.2 ist der Kolben 16 in einer zum Teilraum 3.2 offenen Bohrung 18 angeordnet und mit dem Druck im Teilraum 3.2 beaufschlagbar. Im Ventilgehäuse 2 sind weiterhin zwei SteuerKanäle ausgebildet, und zwar der Steuerkanal 19, der den Einlass 4 bzw. den Teilraum 3.1 mit dem Zylinderraum 17 verbindet und in welchem ein elektrisch betätigbares Steuerventil 20 (z.B. Magnetventil) vorgesehen ist, mit dem der Steuerkanal 19 geöffnet und geschlossen werden kann. Ein zweiter Steuerkanal 21 verbindet den Zylinderraum 17 mit einem an die Umgebung führenden Auslass. In diesem Steuerkanal 21 ist ein elektrisch betätigbares Steuerventil 22 (z.B. Magnetventil) vorgesehen, mit dem auch dieser Steuerkanal geöffnet und geschlossen werden kann.

Die Arbeitsweise des Dosier- und Sperrventils 1 lässt sich, wie folgt, erläutern:

Es wird davon ausgegangen, dass das Steuerventil 20 geschlossen und das Steuerventil 22 geöffnet ist und am Einlass 4 Wasser mit Druck ansteht. Durch den auf den Kolbenabschnitt 16.2 einwirkenden Druck wird über den Servokolben (16) und die Verbindungsstange 15 der Ventilkörper 7 derart verschoben, dass das Flüssigkeitsventil 6 schießt, d. h. die Ringdichtung 7.3 abgedichtet gegen die Wand 9 anliegt, wobei dieser geschlossene Zustand dann durch den Druck im Teilraum 3.1 unterstützt aufrecht erhalten wird.

Soll das Dosier- und Sperrventil 1 geöffnet werden, so wird das Steuerventil 22 geschlossen und das Steuerventil 20 geöffnet. Über den dann geöffneten Steuerkanal 19 wird der Zylinderraum 17 mit Wasserdruck beaufschlagt. Hierdurch wird der Servokolben 16 nach unten, d.h. im Sinne eines Öffnens des Flüssigkeitsventils 6 bewegt, und zwar dadurch, dass die Kolbenfläche des Kolbenabschnitts 16.1 wesentlich größer ist als die wirksame, von dem Ventilkörper 7 gebildete und mit dem Druck des Wassers beaufschlagte Kolbenfläche. Der Ventilkörper 7 wird axial soweit bewegt, bis er gegen das Ende 10.1 der Welle 10 zur Anlage kommt. Durch entsprechendes axiales Verstellen der Welle 10 und damit des von dem Ende 10.1 gebildeten Anschlags für den Ventilkörper durch Drehen der Gewindespindel 12 können der Bewegungshub des Ventilkörpers 7 beim Öffnen und damit der wirksame Querschnitt des Steuerfensters 7.1 bei geöffnetem Ventil gesteuert werden. Weiterhin ist es z.B. auch möglich, bei zunächst weit geöffnetem Flüssigkeitsventil 6 durch entsprechendes Vorbewegen der Welle 10 durch Drehen der Gewindespindel 12 die wirksame Öffnungsfläche des Steuerfensters 7.1 und damit den wirksamen Strömungsquerschnitt des Flüssigkeitsventils 6 zu verkleinern. Über die Gewindespindel 12 und den Antrieb 13 ist somit eine Dosierung des Wasserflusses durch das Dosier- und Sperrventil 1 möglich.

Weiterhin ist auch ein schnelles Schließen des Dosier- und Sperrventils 1 möglich, und zwar durch entsprechende Ansteuerung der Steuerventile 20 bzw. 22, d. h. durch Schließen des Steuerventils 20 und Öffnen des Steuerventils 22, wodurch dann bei einem auf den Kolbenabschnitt 16.2 einwirkenden Wasserdruck der Servokolben 16 zum Schließen des Flüssigkeitsventils 6 bewegt wird. Dieses Schließen ist auch bei einem möglichen Stromausfall gewährleistet, da das Steuerventil 20 so ausgebildet ist, dass es im stromlosen Zustand geschlossen ist, während das Steuerventil 22 im stromlosen Zustand geöffnet ist. Weiterhin ist ein Schließen des Dosier- und Sperrventils 1 auch über den elektromotorischen Antrieb 13 möglich.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird.

### Bezugszeichenliste

- 1: Ventilanordnung
- 2: Ventilgehäuse
- 3: Flüssigkeitskanal
- 3.1, 3.2: Teilraum des Flüssigkeitskanals
- 4: Einlass
- 5: Auslass
- 6: Flüssigkeitsventil
- 7: Ventilkörper
- 7.1: Steuerfenster
- 7.2: Flansch
- 7.3: Ringdichtung des Ventilkörpers 7
- 8: Bohrung
- 9: Wandung
- 10: Welle
- 10.1: Ende der Welle 10
- 10.2: hohlwellenartiger Abschnitt der Welle 10
- 10.3: Boden der Bohrung der Welle 10
- 11: Führungsbuchse für Welle 10
- 12: Gewindespindel
- 13: elektromotorischer Antrieb
- 14: Gewindebuchse
- 15: Verbindungsstange
- 16: Servokol ben
- 16.1: Kolbenabschnitt mit größerem Durchmesser
- 16.2: Kolbenabschnitt mit kleinerem Durchmesser
- 17: Zylinderkammer für Servokolben
- 18: Bohrung
- 19: Steuerkanal
- 20: Steuerventil oder Magnetventil
- 21: Steuerkanal
- 22: Steuerventil oder Magnetventil
- VA: Ventilachse

## Patentansprüche

1. Verschließ- und Dosierventil für ein flüssiges Medium, insbesondere für Wasser, mit einem in einem Ventilgehäuse (2) ausgebildeten Flüssigkeitskanal (3), mit einem einen Ventilkörper (7) aufweisenden Flüssigkeitsventil (6) zwischen einem Einlass (4) und einem Auslass (5) des Flüssigkeitskanals (3) sowie mit einer Kolben-Zylinder-Anordnung (16, 17) zum Bewegen des Ventilkörpers (7) für eine Öffnen und Schließen, **dadurch gekennzeichnet,**
**dass** das Flüssigkeitsventil (6) einen von dem jeweiligen Bewegungshub des Ventilkörpers (7) aus der Schließposition in eine Öffnungsposition abhängigen Strömungsquerschnitt sowie einen durch einen motorisch betätigbaren Anschlag einstellbaren Hub aufweist.

2. Dosier- und Sperrventil nach Anspruch 1, **dadurch gekennzeichnet, dass** wenigstens ein Anschlag (10.1) vorgesehen ist, mit dem der Bewegungshub des Ventilkörpers (7) aus einer geschlossenen Stellung in eine geöffnete Stellung begrenzt wird, und dass der Anschlag (10.1) zur Steuerung der Größe dieses Bewegungshubes und damit zur Steuerung des Strömungsquerschnittes des geöffneten Flüssigkeitsventils (6) durch den elektromotorischen Antrieb (13) bewegbar ist.

3. Dosier- und Sperrventil nach Anspruch 1 oder 2, **dadurch gekennzeichnet, dass** die Kolben-Zylinder-Anordnung für die Betätigung des Ventilkörpers (7) wenigstens einen Zylinderraum (17) aufweist, in welchem ein erster Kolben oder Kolbenabschnitt (16.1) axial verschiebbar vorgesehen ist, und dass der Zylinderraum (17) über einen ersten Steuerkanal (19) mit einem elektrisch steuerbaren ersten Steuerventil (20) mit dem Einlass (4) oder einem unmittelbar mit dem Einlass (4) in Verbindung stehenden Teilraum (3.1) des Flüssigkeitskanals (3) und über einen zweiten Steuerkanal (21) mit einem elektrisch steuerbaren zweiten Steuerventil (22) mit dem Auslass (5) des Flüssigkeitskanals oder einem weiteren, drucklosen Auslass verbunden ist.

4. Dosier- und Sperrventil nach einem der vorhergehenden Ansprüche, **dadurch gekennzeichnet, dass** die Kolben-Zylinder-Anordnung zur Bewegung des Ventilkörpers (7) einen zweiten Kolben oder Kolbenabschnitt (16.2) aufweist, der mit dem Druck im Flüssigkeitskanal (3) beaufschlagbar ist, beispielsweise mit dem Druck eines zwischen dem Flüssigkeitsventil (6) und dem Auslass (5) gebildeten Teilraumes (3.2)

5. Dosier- und Sperrventil nach Anspruch 4, **dadurch gekennzeichnet, dass** der erste Kolben oder Kolbenabschnitt (16.1) eine Kolbenfläche bildet, die größer ist als die Kolbenfläche des zweiten Kolbens oder Kolbenabschnittes (16.2).

6. Dosier- und Sperrventil nach einem der vorhergehenden Ansprüche, **dadurch gekennzeichnet, dass** der Ventilkörper (7) steuerschieberartig mit wenigstens einem Steuerfenster (7.1) für den Flüssigkeitsdurchtritt bei geöffnetem Flüssigkeitsventil (6) ausgebildet ist, und dass der von dem Steuerfenster (7.1) gebildete Strömungsquerschnitt von der Hubstellung des Ventilkörpers abhängig ist.

7. Dosier- und Sperrventil nach einem der vorhergehenden Ansprüche, **dadurch gekennzeichnet, dass** der Ventilkörper (7) als ein an einem Ende geschlossener Hohlzylinder mit wenigstens einer Steueröffnung (7.1) in der Zylinderwandung ausgebildet und in einer passenden Bohrung einer Trennwandung zwischen Einlass (4) und Auslass (5) axial verschiebbar vorgesehen ist.

8. Dosier- und Sperrventil nach einem der vorhergehenden Ansprüche, **dadurch gekennzeichnet, dass** der Anschlag für die Steuerung der Hubbewegung des Ventilkörpers (7) von einer mit dem elektromotorischen Antrieb (13) axial verschiebbaren Welle oder Gewindespindel (10) gebildet ist.

9. Dosier- und Sperrventil nach einem der vorhergehenden Ansprüche, **dadurch gekennzeichnet, dass** die achsgleich mit der Achse des Ventilkörpers (7) angeordnete Welle oder Gewindespindel (10) einen hohlwellenartigen Abschnitt (10.2) mit Innengewinde aufweist, in welches das Gewinde einer weiteren durch den elektromotorischen Antrieb (13) angetriebenen Gewindespindel (12) eingreift.

10. Dosier- und Sperrventil nach einem der vorhergehenden Ansprüche, **dadurch gekennzeichnet, dass** die Kolben-Zylinder-Anordnung (16, 17) für die Betätigung des Ventilkörpers (7) und der einstellbare, den Hub begrenzende Anschlag (10.1) auf unterschiedlichen Seiten des Ventilkörpers (7) vorgesehen sind.

11. Dosier- und Sperrventil nach einem der vorhergehenden Ansprüche, **dadurch gekennzeichnet, dass** das erste Steuerventil im stromlosen Zustand geschlossen und das zweite Steuerventil (22) im stromlosen Zustand geöffnet sind.
